# FASCICULE DE BREVET EUROPEEN

(11) **EP 1 836 438 B1**
(45) Date de publication et mention de la délivrance du brevet: **01.08.2018**
(21) Numéro de dépôt: 05848179.7
(22) Date de dépôt: 20.12.2005
(51) Int. Cl.: F23C 5/28, F23D 14/84, F23D 23/00, F23C 6/04

(54) **PROCEDE DE COMBUSTION ETAGEE PRODUISANT DES FLAMMES ASYMETRIQUES**
ASYMMETRISCHE FLAMMEN ERZEUGENDES ABGESTUFTES VERBRENNUNGSVERFAHREN
STAGED COMBUSTION METHOD REPRODUCING ASYMMETRIC FLAMES

(30) Priorité: 03.01.2005 FR 0550010
(43) Date de publication de la demande: 26.09.2007
(73) Titulaire: L'AIR LIQUIDE, Société Anonyme pour l'Etude et l'Exploitation des Procédés Georges Claude, 75321 Paris Cedex 07 (FR)
(72) Inventeur: TSIAVA, Rémi, F-91250 St Germain Les Corbeil (FR); RECOURT, Patrick, F-91460 Marcoussis (FR); LEROUX, Bertrand, 91310 LINAS (FR)
(74) Mandataire: De Vleeschauwer, Natalie Y.L.D.
(86) Numéro de dépôt international: PCT/FR2005/051118
(87) Numéro de publication internationale: WO 2006/072724

(56) Documents cités:
- EP-A- 1 243 565
- FR-A- 2 480 906
- US-A- 4 690 075
- US-A- 4 927 357
- US-A- 5 346 524
- US-A- 6 041 622
- US-A- 6 079 229
- US-A1- 2004 157 178
- US-B1- 6 331 107
- PATENT ABSTRACTS OF JAPAN vol. 1995, no. 04, 31 mai 1995 (1995-05-31) & JP 07 010545 A (ISHIZUKA GLASS CO LTD; others: 01), 13 janvier 1995 (1995-01-13)

## Description

La présente invention se rapporte à un procédé de combustion étagée produisant des flammes asymétriques.

La mise en place d'un système de combustion dans un four industriel destiné à porter une charge à haute température doit permettre d'assurer l'efficacité des transferts thermiques tout en évitant d'endommager la structure même de l'enceinte du four. Pour ce faire, la disposition des brûleurs doit respecter plusieurs règles et il est nécessaire, d'une part, d'éviter que les flammes issues des brûleurs ne se développent à proximité d'une paroi du four, et d'autre part, que les flammes n'interagissent entre elles. En effet, dans ce dernier cas, chaque flamme a tendance à être soulevée et à venir chauffer la paroi supérieure de la voûte, risquant ainsi fortement d'endommager le four. La plupart des brûleurs actuels, qu'ils fonctionnent avec de l'air, de l'air enrichi en oxygène ou avec de l'oxygène pur comme comburant, possèdent une forme de flamme symétrique par rapport à un axe du brûleur. Ces brûleurs peuvent présenter une structure de flamme plate ou posséder une configuration concentrique développant une flamme cylindrique. Compte tenu des exigences précédentes ainsi que des formes de flamme développées par les brûleurs actuels, leur disposition à l'intérieur du système de combustion du four est délicate et entraîne généralement de nombreux inconvénients. Plus précisément, pour éviter que les flammes développées par les brûleurs n'endommagent une paroi du four, ceux-ci doivent être placés à une distance suffisante des parois concernées. La surface efficace de transfert thermique s'en trouve considérablement réduite et toute augmentation de la puissance du brûleur risque de rendre cette distance insuffisante. Par ailleurs, pour éviter le problème de soulèvement des flammes de deux brûleurs disposés en vis-à-vis, il convient soit de s'assurer que la longueur de flamme de chaque brûleur ne dépasse pas la demi-largeur du four, ce qui limite la marge de manoeuvre en terme de puissance des brûleurs et risque de conduire inutilement à une multiplication du nombre de brûleurs, soit de disposer les brûleurs de manière décalée les uns par rapport aux autres, ce qui conduit à un fonctionnement du four qui n'est plus symétrique ni uniforme.

Un procédé selon le préambule de la revendication 1 est divulgué par les documents FR2480906, US4690075 et US2004/157178.

La présente invention a pour but de remédier aux inconvénients précédemment évoqués, et consiste pour cela en un procédé de combustion selon l'objet de la revendication 1. Ainsi, grâce à une répartition inégale de la puissance de combustion entre chaque demi-ensemble du brûleur, il est possible créer une zone à forte puissance de combustion sur un demi-ensemble et une zone à faible puissance de combustion sur le deuxième demi-ensemble. Ceci permet de déplacer la zone active de combustion, et par conséquent de modifier la géométrie de la flamme produite, de manière à obtenir une flamme asymétrique. De plus, le fait de former une flamme asymétrique permet de réduire les risques de recouvrement, chaque brûleur pouvant être réglé de manière à ce que sa flamme n'interagisse pas avec la flamme d'un autre brûleur. De préférence, les deux demi-ensembles sont répartis symétriquement autour d'un axe de symétrie S du brûleur.

Avantageusement, un troisième jet de comburant peut être injecté à une deuxième distance (L2) supérieure à la première distance (L1) par un moyen d'injection tertiaire en comburant (5). Cette troisième injection de comburant est destinée à garantir une dilution suffisante des réactifs avant la zone principale de combustion, de manière à limiter la formation de composés NOx thermiques. Selon l'invention, une quantité différente de combustible est injectée dans les moyens d'injection en combustible de chaque demi-ensemble. De ce fait la puissance de combustion délivrée par chaque demi-ensemble est différente, la quantité de comburant délivré par les moyens d'injection primaire et secondaire en comburant étant bien évidemment adaptée en conséquence selon le débit de combustible.

Selon un mode particulier, le brûleur crée une flamme à proximité d'une paroi, et la puissance du demi-ensemble le plus proche de ladite paroi possède la puissance de combustion la plus faible. Cette paroi est généralement parallèle à l'axe de symétrie du brûleur, par exemple lorsqu'il s'agit de la paroi d'enfournement d'un four. La zone à forte puissance de combustion étant éloignée des parois du four, les risques d'endommagement de ces parois sont grandement diminués.

L'invention concerne également un procédé de chauffage d'une matière dans un four, ledit four étant équipé d'au moins une paire de brûleurs, les brûleurs de ladite paire étant placés face à face dans le four, dans lequel :
- les brûleurs mettent en oeuvre le procédé de combustion tel que décrit précédemment,
- les brûleurs de la paire sont disposés dans le four de manière à ce que chaque demi-ensemble d'un brûleur soit en face d'un demi-ensemble de l'autre brûleur de la paire, et
- le demi-ensemble du premier brûleur de la paire présentant la plus faible puissance de combustion fait face au demi-ensemble du second brûleur de la paire présentant la puissance de combustion la plus élevée. Selon cette mise en oeuvre, les demi-ensembles de paires de brûleurs sont face-à-face et les demi-ensembles sont réglés de manière à ce qu'ils développent une flamme complémentaire de celle développée par le demi-ensemble placé en vis-à-vis. De préférence, pour chaque brûleur, la puissance de combustion de chaque demi-ensemble est inférieure à 0,8 fois la puissance totale dudit brûleur. De cette manière, la puissance du deuxième demi-ensemble étant égale à la puissance totale diminuée de la puissance du premier demi-ensemble, la puissance d'un demi-ensemble reste supérieure à 0,2 fois la puissance totale, ce qui évite des problèmes de flamme trop courte ou instable. Selon une variante, pour les brûleurs d'une même paire, un demi-ensemble peut fonctionner avec une stoechiométrie de combustion supérieure à 1 et le demi-ensemble placé en face de ce demi-ensemble sur-stoechiométrique fonctionne alors avec une stoechiométrie de combustion inférieure à 1. Dans cette variante, la flamme générée par le demi-ensemble sur-stoechiométrique est fortement génératrice de suies. La combustion de ces imbrûlés peut alors être achevée grâce au supplément d'oxygène apporté par l'autre demi-ensemble du brûleur apparié placé en vis-à-vis, réglé en conséquence pour fonctionner avec une stoechiométrie inférieure à la valeur 1.

L'invention concerne enfin un procédé de chauffage d'une matière dans un four, ledit four étant équipé d'au moins une paire de brûleurs, les brûleurs de ladite paire étant placés face à face dans le four, dans lequel :
- les brûleurs mettent en oeuvre le procédé de combustion tel que décrit précédemment, et
- les brûleurs de la paire sont disposés dans le four de manière à ce que, pour chaque brûleur, seul un de ses demi-ensembles soit en face d'un demi-ensemble de l'autre brûleur de la paire, et
- le demi-ensemble du premier brûleur de la paire présentant la plus faible puissance de combustion fait face au demi-ensemble du second brûleur de la paire présentant la puissance de combustion la plus élevée. Selon cette mise en oeuvre, les demi-ensembles qui sont placées face-à-face sont réglés de manière à développer des flammes complémentaires. De préférence, pour chaque brûleur, la puissance de combustion de chaque demi-ensemble est inférieure à 0,8 fois la puissance totale dudit brûleur. Selon une variante, pour les brûleurs d'une même paire, un demi-ensemble peut fonctionner avec une stoechiométrie de combustion supérieure à 1 et le demi-ensemble placé en face de ce demi-ensemble sur-stoechiométrique fonctionne alors avec une stoechiométrie de combustion inférieure à 1. Dans cette variante, la flamme générée par le demi-ensemble sur-stoechiométrique est fortement génératrice de suies. La combustion de ces imbrûlés peut alors être achevée grâce au supplément d'oxygène apporté par l'autre demi-ensemble du brûleur apparié placé en vis-à-vis, réglé en conséquence pour fonctionner avec une stoechiométrie inférieure à la valeur 1.

La mise en oeuvre de l'invention sera mieux comprise à l'aide de la description détaillée qui est exposée ci-dessous en regard du dessin annexé dans lequel :
- la figure 1 est une représentation schématique d'un demi ensemble d'un brûleur selon l'invention,
- la figure 2 illustre le fonctionnement du brûleur de la figure 1,
- la figure 3 est une représentation schématique d'un four industriel utilisant des brûleurs disposés en face-à-face,
- la figure 4 est une représentation schématique d'un four industriel utilisant des brûleurs disposés en décalé.

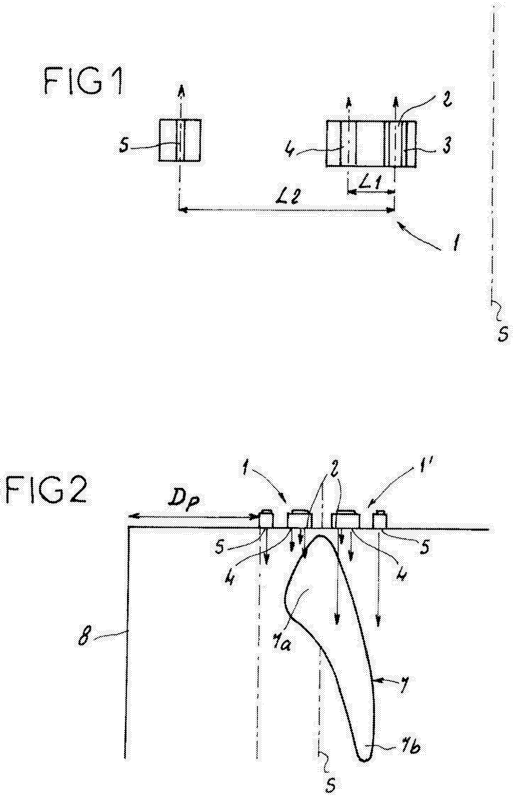

Un brûleur à jets séparés selon l'invention comprend deux demi-ensembles 1, 1', dont l'un est représenté sur la figure 1. Chaque demi-ensemble 1, 1' comprend une alimentation en combustible 2 à laquelle est associée une alimentation primaire en comburant 3, en l'espèce l'oxygène, située à une première distance de l'alimentation en combustible 2, une alimentation secondaire en comburant 4 située à une deuxième distance L1, supérieure à la première distance, de l'alimentation en combustible 2, et une alimentation tertiaire en comburant 5 située à une troisième distance L2, supérieure à la deuxième distance L1, de l'alimentation en combustible 2. Le combustible utilisé peut être sous forme gazeuse ou sous forme liquide, celui-ci étant le cas échant pulvérisé grâce à un système d'atomisation approprié. Plus précisément, l'alimentation tertiaire 5 en comburant est située à une distance relativement importante de l'alimentation en combustible 2 et est utilisée pour injecter de l'oxygène avec une vitesse élevée. Cette disposition permet de garantir une dilution suffisante des réactifs avant la zone principale de combustion, évitant ainsi une formation trop importante de composés NOx thermiques.

En fonctionnement, tel que représenté sur la figure 2, chaque sous ensemble 1, 1' est réparti symétriquement autour d'un axe de symétrie S, chaque alimentation en combustible 2 et en comburant 3, 4, 5 pouvant être réglée indépendamment en débit. Chaque demi-ensemble 1, 1' est réglé de manière à ce que la symétrie structurelle soit rompue de manière à obtenir une flamme asymétrique. Pour ce faire, les débits des alimentations en combustible 2 et en comburant 3, 4, 5 sont réglés différemment. En l'espèce, le débit de combustible délivré pour le demi-ensemble 1 est réglé de manière à être inférieur au débit de combustible délivré pour le demi-ensemble 1'. Les alimentations primaire 3, secondaire 4 et tertiaire 5 sont réglées en conséquence par rapport à l'alimentation en combustible 2 du demi-ensemble 1, 1' concerné. Les débits des réactifs sont symboliquement représentés par une flèche de longueur variable. Tel que représenté, la puissance de combustion du demi-ensemble 1' est supérieur à la puissance de combustion du demi-ensemble 1, générant de ce fait une flamme asymétrique 7 possédant une longueur au niveau du sous ensemble 1' nettement inférieure à sa longueur au niveau du sous-ensemble 1. La flamme 7 présente donc une zone pauvre 7a au niveau du sous ensemble 1 et une zone riche 7b au niveau du sous ensemble 1'. L'obtention d'une telle flamme asymétrique 7 permet de réduire la distance de sécurité Dp nécessaire entre le brûleur et une paroi 8 du four pour éviter d'endommager cette dernière. Un transfert thermique minimal vers une charge à chauffer est ainsi garanti vers la charge située à proximité de la paroi 8 du four tout en évitant une formation de points chauds sur ladite paroi 8.

De la même manière, la flamme asymétrique 7 permet d'éviter que les flammes provenant de brûleurs situés face à face n'interagissent entre elles.

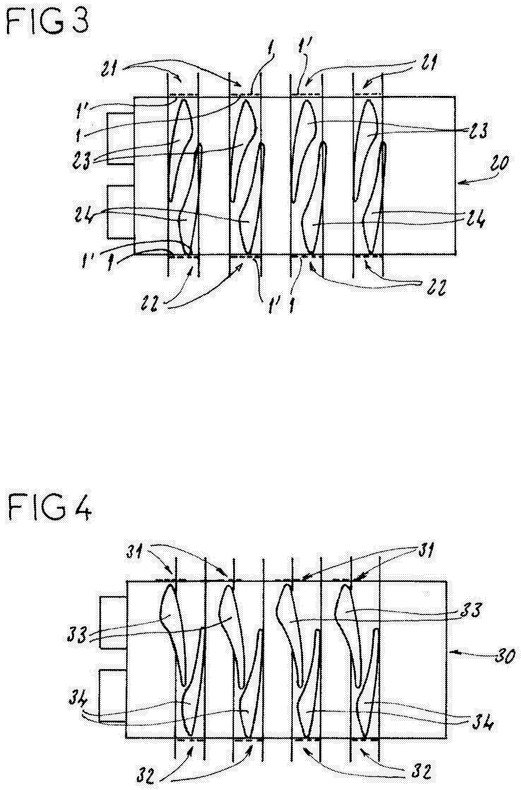

La figure 3 montre un four 20 comprenant un ensemble de brûleurs 21, 22, tels que définis sur les figures 1 et 2, disposés par paire en face l'un de l'autre. Chaque brûleur 21, 22 est réglé de manière à ce qu'il développe une flamme asymétrique 23, 24 de forme complémentaire à la flamme 24, 23 provenant du brûleur 22, 21 apparié. De cette manière, tout recouvrement de flamme est évité, diminuant de ce fait les risques d'endommagement du four 20. En variante, la répartition de puissance telle que décrite précédemment, peut être réalisée en gardant ou non une stoechiométrie de combustion proche de la valeur 1 pour chaque demi-ensemble 1, 1'. Dans le cas de stoechiométries différentes de la valeur 1, le demi-ensemble de plus grande puissance est réglé avec une stoechiométrie de combustion inférieure à 1 tandis que le demi-ensemble fonctionnant à moindre puissance sera réglé avec une stoechiométrie de combustion supérieure à la valeur 1. Ce réglage permet d'obtenir une zone riche génératrice de suies sur le demi-ensemble du brûleur 21, 22, la combustion des imbrûlés étant achevée grâce au supplément d'oxygène apporté par le demi-ensemble du brûleur 22, 21 apparié.

La figure 4 montre un four 30 comprenant un ensemble de brûleurs 31, 32, tels que décrits sur les figures 1 et 2, disposés par paire en face l'un de l'autre mais de manière décalée, c'est-à-dire de manière à ce que seul un demi-ensemble du brûleur 31 soit en face d'un demi-ensemble du brûleur 32. Les brûleurs 31, 32 sont réglés de manière à ce qu'ils développent une flamme asymétrique 33, 34 présentant une zone pauvre 33a, 34a et une zone riche 33b, 34b. Plus précisément, les brûleurs 31, 32 sont réglés de manière à ce que la zone riche 33b soit située au niveau de la zone pauvre 34a, la zone riche 34b venant recouvrir la zone riche 33b. Cette disposition est particulièrement avantageuse dans le cas de brûleurs 31, 32 fonctionnant avec une stoechiométrie de combustion différente de la valeur 1. En effet, dans le cas où le demi-ensemble 1' du brûleur 31 est réglé avec une stoechiométrie de combustion inférieure à la valeur 1, la zone riche 33b de la flamme asymétrique 33 est fortement génératrice de suies. La combustion de ces imbrûlés peut alors être achevée grâce au supplément d'oxygène apporté par le demi-ensemble 1 du brûleur 32 apparié, réglé en conséquence pour fonctionner avec une stoechiométrie inférieure à la valeur 1.

## Revendications

1. Procédé de combustion étagée d'un combustible au moyen d'au moins un brûleur, chaque brûleur comportant deux demi-ensembles (1, 1') comprenant chacun au moins un moyen d'injection en combustible (2) associé à un moyen d'injection primaire en comburant (3), et au moins un moyen d'injection secondaire en comburant (4), un premier jet de comburant étant injecté à une première distance du combustible par le moyen d'injection primaire de manière à engendrer une première combustion incomplète, et un deuxième jet de comburant étant injecté à une deuxième distance (L1), supérieure à la première distance, du moyen d'injection en combustible de manière à engendrer une deuxième combustion avec le combustible restant de la première combustion incomplète, ledit procédé étant **caractérisé en ce qu'**une quantité différente de combustible est injectée par les moyens d'injection en combustible (2) de chaque demi-ensemble (1, 1') de manière à ce que chaque demi-ensemble délivre une puissance de combustion différente de celle délivrée par l'autre demi-ensemble et qu'une flamme asymétrique (7) est produite.

2. Procédé de combustion selon la revendication 1, **caractérisé en ce que** le combustible est sous forme gazeuse ou liquide.

3. Procédé de combustion selon la revendication 1 ou 2, **caractérisé en ce qu'**un troisième jet de comburant est injecté à une deuxième distance (L2) supérieure à la première distance (L1) par un moyen d'injection tertiaire en comburant (5).

4. Procédé de combustion selon l'une quelconque des revendications 1 à 3, **caractérisé en ce que** le brûleur est situé à proximité d'une paroi (8), et **en ce que** la puissance du demi-ensemble le plus proche de ladite paroi (8) possède la puissance de combustion la plus faible.

5. Procédé de chauffage d'une matière dans un four (20), ledit four (20) étant équipé d'au moins une paire de brûleurs (21, 22), les brûleurs (21, 22) de ladite paire étant placés face à face dans le four, **caractérisé en ce que** les brûleurs (21, 22) mettent en oeuvre le procédé de combustion selon l'une des revendications 1 à 4, en ce queles brûleurs de la paire sont disposés dans le four de manière à ce que chaque demi-ensemble d'un brûleur soit en face d'un demi-ensemble de l'autre brûleur de la paire, et **en ce que** le demi-ensemble du premier brûleur (21) de la paire présentant la plus faible puissance de combustion fait face au demi-ensemble du second brûleur (22) de la paire présentant la puissance de combustion la plus élevée.

6. Procédé selon la revendication 5, **caractérisé en ce que**, pour chaque brûleur, la puissance de combustion de chaque demi-ensemble (1, 1') est inférieure à 0,8 fois la puissance totale dudit brûleur (21, 22, 31, 32).

7. Procédé de combustion selon la revendication 5 ou 6, **caractérisé en ce que**, pour les brûleurs d'une même paire, un demi- ensemble fonctionne avec une stoechiométrie de combustion supérieure à 1 et le demi-ensemble placé en face de ce demi-ensemble sur- stoechiométrique fonctionne avec une stoechiométrie de combustion inférieure à 1.

8. Procédé de chauffage d'une matière dans un four (20), ledit four (20) étant équipé d'au moins une paire de brûleurs (21, 22), les brûleurs (21, 22) de ladite paire étant placés face à face dans le four, **caractérisé en ce que** les brûleurs (21, 22) mettent en oeuvre le procédé de combustion selon l'une des revendications 1 à 4, **en ce que** les brûleurs de la paire sont disposés dans le four de manière à ce que, pour chaque brûleur, seul un de ses demi-ensembles soit en face d'un demi- ensemble de l'autre brûleur de la paire, et **en ce que** le demi-ensemble du premier brûleur (21) de la paire présentant la plus faible puissance de combustion fait face au demi-ensemble du second brûleur (22) de la paire présentant la puissance de combustion la plus élevée.

9. Procédé selon la revendication 8, **caractérisé en ce que**, pour chaque brûleur, la puissance de combustion de chaque demi-ensemble (1, 1') est inférieure à 0,8 fois la puissance totale dudit brûleur (21, 22, 31, 32).

10. Procédé de combustion selon la revendication 8 ou 9, **caractérisé en ce que**, pour les brûleurs d'une même paire, un demi- ensemble fonctionne avec une stoechiométrie de combustion supérieure à 1 et le demi-ensemble placé en face de ce demi-ensemble surstoechiométrique fonctionne avec une stoechiométrie de combustion inférieure à 1.

## Patentansprüche

1. Verfahren zum gestuften Verbrennen eines Brennstoffs mittels mindestens eines Brenners, wobei jeder Brenner zwei Halbsätze (1, 1') umfasst, die jeweils mindestens ein Brennstoff-Einspritzmittel (2), das mit einem primären Oxidationsmittel-Einspritzmittel (3) verknüpft ist, und mindestens ein sekundäres Oxidationsmittel-Einspritzmittel (4) umfassen, wobei ein erster Oxidationsmittelstrahl vom primären Einspritzmittel auf einer ersten Distanz vom Brennstoff eingespritzt wird, sodass eine erste unvollständige Verbrennung bewirkt wird, und ein zweiter Oxidationsmittelstrahl auf einer zweiten Distanz (L1) vom Brennstoff-Einspritzmittel, welche größer ist als die erste Distanz, eingespritzt wird, sodass eine zweite Verbrennung mit dem restlichen Brennstoff aus der ersten unvollständigen Verbrennung bewirkt wird, wobei das Verfahren **dadurch gekennzeichnet ist, dass** von den Brennstoff-Einspritzmitteln (2) jedes Halbsatzes (1, 1') eine unterschiedliche Brennstoffmenge eingespritzt wird, sodass jeder Halbsatz eine Verbrennungsleistung liefert, welche sich von derjenigen, die vom anderen Halbsatz geliefert wird, unterscheidet, und dass eine asymmetrische Flamme (7) erzeugt wird.

2. Verbrennungsverfahren nach Anspruch 1, **dadurch gekennzeichnet, dass** der Brennstoff in gasförmiger oder flüssiger Form vorliegt.

3. Verbrennungsverfahren nach Anspruch 1 oder 2, **dadurch gekennzeichnet, dass** von einem tertiären Oxidationsmittel-Einspritzmittel (5) ein dritter Oxidationsmittelstrahl auf einer zweiten Distanz (L2) eingespritzt wird, welche größer ist als die erste Distanz (L1).

4. Verbrennungsverfahren nach einem der Ansprüche 1 bis 3, **dadurch gekennzeichnet, dass** der Brenner nahe einer Wand (8) liegt, und dadurch, dass die Leistung des Halbsatzes, welcher sich am nähesten zur Wand (8) befindet, die schwächste Verbrennungsleistung besitzt.

5. Verfahren zum Erhitzen eines Materials in einem Ofen (20), wobei der Ofen (20) mit mindestens einem Brennerpaar (21, 22) ausgestattet ist, wobei die Brenner (21, 22) des Paares einander gegenüberliegend im Ofen platziert sind, **dadurch gekennzeichnet, dass** die Brenner (21, 22) das Verbrennungsverfahren nach einem der Ansprüche 1 bis 4 umsetzen, dadurch, dass die Brenner des Paares so im Ofen angeordnet sind, dass jeder Halbsatz eines Brenners einem Halbsatz des anderen Brenners des Paares gegenüberliegt, und dadurch, dass der Halbsatz des ersten Brenners (21) des Paares, welcher die schwächste Verbrennungsleistung aufweist, dem Halbsatz des zweiten Brenners (22) des Paares zugewandt ist, welcher die höchste Verbrennungsleistung aufweist.

6. Verfahren nach Anspruch 5, **dadurch gekennzeichnet, dass** bei jedem Brenner die Verbrennungsleistung jedes Halbsatzes (1, 1') kleiner als das 0,8-fache der Gesamtleistung des Brenners (21, 22, 31, 32) ist.

7. Verbrennungsverfahren nach Anspruch 5 oder 6, **dadurch gekennzeichnet, dass** bei den Brennern eines selben Paares ein Halbsatz mit einer Verbrennungsstöchiometrie von größer als 1 läuft, und der diesem über-stöchiometrischen Halbsatz gegenüberliegend platzierte Halbsatz mit einer Verbrennungsstöchiometrie von kleiner als 1 läuft.

8. Verfahren zum Erhitzen eines Materials in einem Ofen (20), wobei der Ofen (20) mit mindestens einem Brennerpaar (21, 22) ausgestattet ist, wobei die Brenner (21, 22) des Paares einander gegenüberliegend im Ofen platziert sind, **dadurch gekennzeichnet, dass** die Brenner (21, 22) das Verbrennungsverfahren nach einem der Ansprüche 1 bis 4 umsetzen, dadurch, dass die Brenner des Paares so im Ofen angeordnet sind, dass bei jedem Brenner nur einer seiner Halbsätze einem Halbsatz des anderen Brenners des Paares gegenüberliegt, und dadurch, dass der Halbsatz des ersten Brenners (21) des Paares, welcher die schwächste Verbrennungsleistung aufweist, dem Halbsatz des zweiten Brenners (22) des Paares zugewandt ist, welcher die höchste Verbrennungsleistung aufweist.

9. Verfahren nach Anspruch 8, **dadurch gekennzeichnet, dass** bei jedem Brenner die Verbrennungsleistung jedes Halbsatzes (1, 1') kleiner als das 0,8-fache der Gesamtleistung des Brenners (21, 22, 31, 32) ist.

10. Verbrennungsverfahren nach Anspruch 8 oder 9, **dadurch gekennzeichnet, dass** bei den Brennern eines selben Paares ein Halbsatz mit einer Verbrennungsstöchiometrie von größer als 1 läuft, und der diesem über-stöchiometrischen Halbsatz gegenüberliegend platzierte Halbsatz mit einer Verbrennungsstöchiometrie von kleiner als 1 läuft.

## Claims

1. Method for the staged combustion of a fuel by means of at least one burner, with each burner comprising two half-assemblies (1, 1') each comprising at least one fuel injecting means (2) associated with a primary oxidant injecting means (3), and at least one secondary oxidant injecting means (4), a first oxidant jet being injected at a first distance from the fuel by the primary injecting means so as to generate a first incomplete combustion, and a second oxidant jet being injected at a second distance (LI), greater than the first distance, from the fuel injecting means so as to generate a second combustion with the remaining fuel of the first incomplete combustion, said method being **characterised in that** a different quantity of fuel is injected by the fuel injecting means (2) of each half-assembly (1, 1') in such a way that each half-assembly delivers a combustion power different from the one delivered by the other half-assembly and an asymmetric flame (7) is produced.

2. Method of combustion according to claim 1, **characterised in that** the fuel is in gaseous or liquid form.

3. Method of combustion according to claim 1 or 2, **characterised in that** a third oxidant jet is injected at a second distance (L2) greater than the first distance (L1) by a tertiary oxidant injecting means (5).

4. Method of combustion according to any of claims 1 to 3, **characterised in that** the burner is located in the vicinity of a wall (8), and **in that** the power of the half-assembly that is closer to said wall (8) has the lower combustion power.

5. Method for heating a material in a furnace (20), said furnace (20) being provided with at least one pair of burners (21, 22), the burners (21, 22) of said pair being placed face to face in the furnace, **characterised in that** the burners (21, 22) implement the method of combustion according to one of claims 1 to 4, **in that** the burners of the pair are arranged in the furnace in such a way that each half-assembly of a burner is facing a half-assembly of the other burner of the pair, and **in that** the half-assembly of the first burner (21) of the pair having the lower combustion power faces the half-assembly of the second burner (22) of the pair having the higher combustion power.

6. Method according to claim 5, **characterised in that**, for each burner, the combustion power of each half-assembly (1, 1') is less than 0.8 times the total power of said burner (21, 22, 31, 32).

7. Method of combustion according to claim 5 or 6, **characterised in that**, for the burners of the same pair, a half-assembly operate with a stoichiometry of combustion greater than 1 and the half-assembly placed facing this surstoichiometric half-assembly operates with a stoichiometry of combustion less than 1.

8. Method for heating a material in a furnace (20), said furnace (20) being provided with at least one pair of burners (21, 22), the burners (21, 22) of said pair being placed face to face in the furnace, **characterised in that** the burners (21, 22) implement the method of combustion according to one of claims 1 to 4, **in that** the burners of the pair are arranged in the furnace in such a way that, for each burner, only one of its half-assemblies is facing a half-assembly of the other burner of the pair, and **in that** the half-assembly of the first burner (21) of the pair having the lower combustion power faces the half-assembly of the second burner (22) of the pair having the higher combustion power.

9. Method according to claim 8, **characterised in that**, for each burner, the combustion power of each half-assembly (1, 1') is less than 0.8 times the total power of said burner (21, 22, 31, 32).

10. Method of combustion according to claim 8 or 9, **characterised in that**, for the burners of the same pair, a half-assembly operate with a stoichiometry of combustion greater than 1 and the half-assembly placed facing this surstoichiometric half-assembly operates with a stoichiometry of combustion less than 1.
